# EUROPÄISCHE PATENTANMELDUNG

(11) **EP 2 685 221 A1**
(43) Veröffentlichungstag der Anmeldung: **15.01.2014**
(21) Anmeldenummer: 12175636.5
(22) Anmeldetag: 10.07.2012
(51) Int. Cl.: G01D 5/347, G01D 5/38

(54) **Drehgeber**

(71) Anmelder: Siemens Aktiengesellschaft, 80333 München (DE)
(72) Erfinder: Schwesig, Günter, 91054 Erlangen (DE); Wetzel, Ulrich, 91325 Adelsdorf (DE)

(57) **Zusammenfassung**

Es soll ein kostengünstiger Drehgeber mit einer Lichtquelle (1"), einer Codescheibe (2") und einem Lichtempfänger (3") geschaffen werden, der unempfindlich gegenüber Taumelbewegungen der mit einer rotierenden Welle (4") verbundenen Codescheibe (2") ist. Hierzu ist vorgesehen, dass die Codescheibe (3") bezüglich des von der Lichtquelle (1") ausgehenden Lichts transparent ist und dass der Drehgeber einen in Bezug auf die Codescheibe (2") der Lichtquelle (1") gegenüberliegend angeordnetes Spiegelelement (6") umfasst, das das von der Lichtquelle (1") ausgehende und die Codescheibe (2") durchdringende Licht reflektiert, wobei ein in Bezug auf die Codescheibe (2") auf der gleichen Seite wie die Lichtquelle (1") angeordneter Lichtempfänger (3") das reflektierte Licht empfängt.

## Beschreibung

Die Erfindung betrifft einen Drehgeber mit einer Lichtquelle, einer Codescheibe und einem Lichtempfänger. Ferner betrifft die Erfindung ein Verfahren zur Bestimmung des Drehwinkels einer drehbar gelagerten Welle mit einem derartigen Drehgeber.

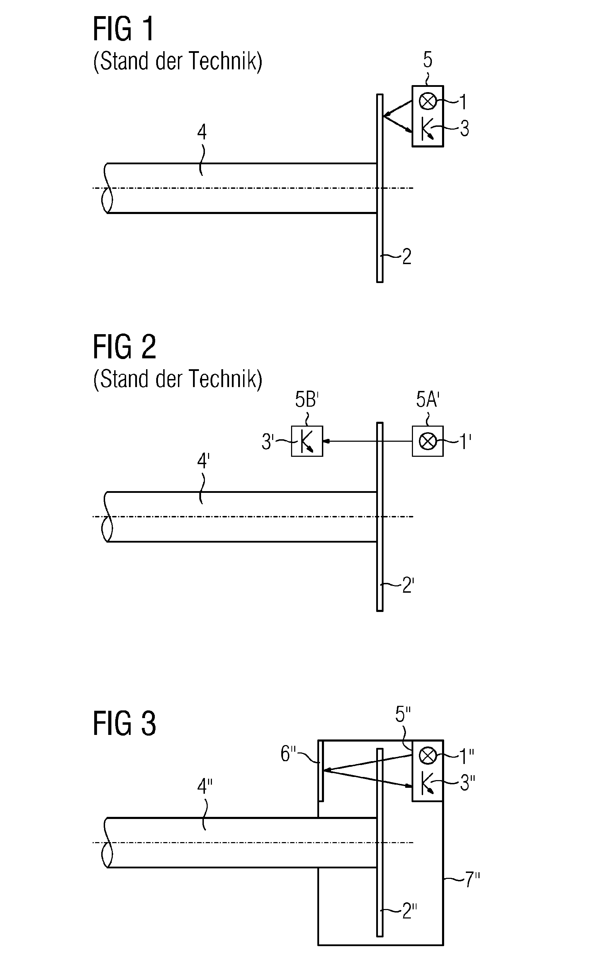

Aus der WO 2005/071363 A1 sind Drehgeber bekannt, bei denen eine an einer drehbar gelagerten Welle befestigte Codescheibe mit einem Code versehen ist. Bei einer ersten Ausführungsform gemäß Figur 1 trifft von einer Lichtquelle 1 ausgehendes Licht die Codescheibe 2 und wird von dort an einer reflektierenden Schicht der Codescheibe 2 reflektiert und von einem Lichtempfänger 3 empfangen. Vorteilhaft sind die Lichtquelle 1 und der Lichtempfänger 3 auf einem gemeinsamen Träger 5 angeordnet, was die Anzahl der Bauteile, den Platzbedarf und damit Kosten senkt.

Bei einer weiteren aus der oben genannten Offenlegungsschrift bekannten Ausführungsform gemäß Figur 2 ist die Codescheibe 2' mit dem darauf befindlichen Code transparent ausgebildet. Ein von der Lichtquelle 1' ausgehender Lichtstrahl durchleuchtet die Codescheibe 2' und trifft auf den in Bezug auf die Codescheibe 2' der Lichtquelle 1' gegenüber angeordneten Lichtempfänger 3'. Diese Ausführungsform ist unempfindlicher gegenüber Taumelbewegungen der Codescheibe 2', hat jedoch gegenüber der Ausführungsform gemäß Figur 1 den Nachteil, dass die Lichtquelle 1' und der Lichtempfänger 3' auf separaten Trägern 5A' und 5B' angeordnet sind. Dies erhöht die Anzahl der benötigten Bauteile, den Platzbedarf und damit letztendlich die Kosten des Drehgebers.

Aufgabe der vorliegenden Erfindung ist es, einen kostengünstigen, gegenüber Taumelbewegungen der Codescheibe unempfindlichen Drehgeber zu schaffen.

Diese Aufgabe wird durch einen Drehgeber mit den Merkmalen gemäß Patentanspruch 1 gelöst. Ferner wird die Aufgabe durch ein Verfahren zur Bestimmung eines Drehwinkels mittels eines Drehgebers mit den in Anspruch 7 angegebenen Verfahrensschritten gelöst.

Der erfindungsgemäße Drehgeber umfasst eine Lichtquelle eine Codescheibe und einem Lichtempfänger, wobei die Codescheibe bezüglich des von der Lichtquelle ausgehenden Lichts transparent ist und der Drehgeber ein in Bezug auf die Codescheibe der Lichtquelle gegenüberliegend angeordnetes Spiegelelement umfasst, das das von der Lichtquelle ausgehende und die Codescheibe durchdringende Licht reflektiert, wobei ein in Bezug auf die Codescheibe auf der gleichen Seite wie die Lichtquelle angeordneter Lichtempfänger das reflektierte Licht empfängt. Das empfangene Licht wird schließlich durch den Lichtempfänger in ein elektrisches Signal umgewandelt, welches anschließend zum Ermitteln des Drehwinkels ausgewertet wird. Aus mehreren nacheinander erfassten Drehwinkeln kann so beispielsweise eine Motordrehzahl ermittelt werden.

Der Erfindung liegt die Erkenntnis zugrunde, dass ein Drehgeber mit einer transparenten Codescheibe prinzipiell unempfindlicher gegen Taumelbewegungen der Codescheibe ist als ein Drehgeber mit einer reflektierenden Codescheibe. Der erfindungsgemäße Drehgeber umfasst ein Spiegelelement, durch das der von der Lichtquelle ausgehende und die transparente Codescheibe durchdringende Lichtstrahl reflektiert und in Richtung zu dem Lichtempfänger hin gelenkt wird, wobei der Lichtempfänger vorzugsweise neben der Lichtquelle und in geringem Abstand zu der Lichtquelle angeordnet ist. Die Lichtquelle und der Lichtempfänger können so in einem gemeinsamen, vorzugsweise verhältnismäßig klein ausgebildeten Gebergehäuse angeordnet werden. Die transparente Codescheibe und der Spiegel befinden sich dann nicht innerhalb dieses Gebergehäuses. Es ist jedoch möglich, dass auch bei dem erfindungsgemäßen Drehgeber alle wesentlichen Komponenten, nämlich die Lichtquelle, der Lichtempfänger, die transparente Codescheibe und der Spiegel in einem gemeinsamen Gebergehäuse angeordnet sind.

Vorteilhaft ist der erfindungsgemäße Drehgeber als so genannter diffraktiver Drehgeber ausgebildet, bei dem durch das verwendete Codierverfahren nicht nur Veränderungen des Drehwinkels, sondern auch Absolutwerte des Drehwinkels erfasst werden können.

Vorteilhaft ist bei dem erfindungsgemäßen Drehgeber die Codescheibe drehbar gelagert und die Lichtquelle, der Lichtempfänger und das Spiegelelement sind bezüglich des Gebergehäuses fest positioniert. Damit lässt sich eine besonders kostengünstige Ausführungsform erreichen.

Eine vorteilhafte Ausführungsform sieht vor, dass die Lichtquelle und der Lichtempfänger auf einem gemeinsamen Träger, beispielsweise einer Leiterplatte, positioniert sind. Dies führt zu einer Verringerung der Anzahl benötigter Bauteile und damit ebenfalls zu einer Kostenreduzierung.

Vorzugsweise ist der erfindungsgemäße Drehgeber als diffraktiver Drehgeber ausgebildet. Damit kann erreicht werden, dass nicht nur Winkeländerungen sondern auch Absolutwerte erfassbar sind.

Bei einem erfindungsgemäßen Verfahren zur Bestimmung des Drehwinkels einer drehbar gelagerten Welle wird die Welle fest mit einer Codescheibe verbunden, wobei von einer Lichtquelle ein Lichtstrahl ausgesendet wird, der die Codescheibe durchdringt, wobei der Lichtstrahl anschließend von einem Spiegelelement, das nicht Teil der Codescheibe ist, reflektiert wird, und wobei das reflektierte Licht von einem Lichtempfänger empfangen wird. Es ist jedoch auch möglich, dass der erfindungsgemäße Drehgeber eine eigene, Geberwelle umfasst, an der die Codescheibe befestigt ist und die mit einer weiteren Welle, deren Drehwinkel bzw. Drehzahl ermittelt werden soll, gekoppelt ist.

Die Erfindung wird nachfolgend anhand des Ausführungsbeispiels gemäß Figur 3 erläutert:
Bei dem erfindungsgemäßen Drehgeber ist wie bei dem bekannten Drehgeber gemäß Figur 2 eine mit einem Code versehene, transparente Codescheibe 2" an einer drehbar gelagerten Welle 4" befestigt. Anders als bei der bekannten Anordnung gemäß Figur 2 befindet sich bei einer erfindungsgemäßen Anordnung der Lichtempfänger jedoch nicht aus Sicht der Lichtquelle hinter der Codescheibe. Sondern ein von einer Lichtquelle 1" ausgehender Lichtstrahl durchleuchtet die Codescheibe 2" und trifft auf einen aus Sicht der Lichtquelle 1" hinter der Codescheibe 2" angeordneten Spiegel 6". Von dort wird der Lichtstrahl reflektiert, bevor er nach erneutem Durchgang durch die Codescheibe 2" auf den Lichtempfänger 3" trifft, der bezüglich der Codescheibe 2" auf der gleichen Seite wie die Lichtquelle 1" und dicht neben der Lichtquelle 1" angeordnet ist. Der Lichtempfänger 3" wandelt das empfangene Licht in ein elektrisches Signal, welches dann in einer Signalauswerteeinheit (nicht dargestellt) ausgewertet wird und aus dem letztendlich der aktuelle Drehwinkel hervorgeht. Vorteilhaft sind die Lichtquelle 1" und der Lichtempfänger 3" auf einem gemeinsamen Träger 5", beispielsweise einer Platine, montiert. Dies senkt die Bauteilkosten sowie den Platzbedarf.

Es ist möglich, dass sich der erfindungsgemäße Drehgeber aus mehreren separaten, das heißt nicht in einem gemeinsamen Gebergehäuse angeordneten Komponenten zusammensetzt. So können sich lediglich die Lichtquelle und der Lichtempfänger in einem gemeinsamen Gebergehäuse befinden und die Codescheibe sowie der Spiegel können zwar außerhalb dieses Gebergehäuses, jedoch innerhalb eines weiteren Gehäuses, beispielsweise einem Motorgehäuse, angeordnet sein.

Es ist jedoch auch möglich, dass sich, wie im Ausführungsbeispiel gemäß Figur 3 gezeigt, alle wesentlichen Komponenten des erfindungsgemäßen Gebers, nämlich die Lichtquelle 1", der Lichtempfänger 3", die Codescheibe 2" und der Spiegel 6", in einem eigenen, gemeinsamen Gebergehäuse 7" befinden. Vorteilhaft ist dabei das Spiegelelement 6" fest an dem Gebergehäuse 7" befestigt.

Vorteilhaft ist der erfindungsgemäße Drehgeber gemäß Figur 3 als diffraktiver Drehgeber ausgebildet, so dass durch das verwendete Codierverfahren auch absolute Winkelpositionen ermittelbar sind.

## Patentansprüche

1. Drehgeber mit einer Lichtquelle (1"), einer Codescheibe (2") und einem Lichtempfänger (3"),
**dadurch gekennzeichnet, dass** die Codescheibe (3") bezüglich des von der Lichtquelle (1") ausgehenden Lichtes transparent ist und dass der Drehgeber ein in Bezug auf die Codescheibe (2") der Lichtquelle (1") gegenüberliegend angeordnetes Spiegelelement (6") umfasst, das das von der Lichtquelle (1") ausgehende und die Codescheibe (2") durchdringende Licht reflektiert, wobei ein in Bezug auf die Codescheibe (2") auf der gleichen Seite wie die Lichtquelle (1") angeordneter Lichtempfänger (3") das reflektierte Licht empfängt.

2. Drehgeber nach Anspruch 1, wobei die Codescheibe (2") drehbar gelagert ist und die Lichtquelle (1"), der Lichtempfänger (3") und das Spiegelelement (6") bezüglich eines Gebergehäuses (7") fest positioniert sind.

3. Drehgeber nach Anspruch 1 oder 2, wobei die Lichtquelle (1") und der Lichtempfänger (3") auf einem gemeinsamen Träger (5") angeordnet sind.

4. Drehgeber nach einem der Ansprüche 1 bis 3, wobei die Lichtquelle (1") und der Lichtempfänger (3") gemeinsam in einem Gebergehäuses (7") angeordnet sind und die Codescheibe (2") sowie das Spiegelelement (6") außerhalb dieses Gehäuses angeordnet sind.

5. Drehgeber nach einem der Ansprüche 1 bis 3, wobei die Lichtquelle (1"), der Lichtempfänger (3"), die Codescheibe (2") sowie das Spiegelelement (6") gemeinsam in einem Gebergehäuses (7") angeordnet sind.

6. Drehgeber nach einem der Ansprüche 1 bis 3, ausgebildet als diffraktiver Drehgeber.

7. Verfahren zur Bestimmung des Drehwinkels einer drehbar gelagerten Welle (4"), wobei die Welle (4") fest mit einer Codescheibe (2") verbunden ist, wobei von einer Lichtquelle (1") ein Lichtstrahl ausgesendet wird, der die Codescheibe (2") durchdringt, wobei der Lichtstrahl anschließend von einem Spiegelelement (6"), das nicht Teil der Codescheibe (2") ist, reflektiert wird, und wobei das reflektierte Licht von einem Lichtempfänger (3") empfangen wird.
